# EUROPEAN PATENT APPLICATION

(11) **EP 4 745 097 A1**
(43) Date of publication of application: **20.05.2026**
(21) Application number: 23755114.8
(22) Date of filing: 12.07.2023
(51) Int. Cl.: C03B 9/36, C03B 9/38

(54) **METHOD FOR BLOWING AND COOLING GLASS CONTAINERS, BLOWER AND GLASS CONTAINER FORMING MACHINE**

(71) Applicant: Vidrala, S.A., 01400 Llodio (ES)
(72) Inventor: IRIZAR GONZALEZ, Liher, 01400 LLODIO (ES); ALBAIZAR MENCHACA, Eduardo, 01400 LLODIO (ES)
(74) Representative: Galbaian S.Coop.
(86) International application number: PCT/ES2023/070444
(87) International publication number: WO 2025/012490

(57) **Abstract**

The invention relates to a method and a blower to blow and cool glass containers (1). The method comprises introducing a gob of molten glass in a preparatory mold, deforming the gob of glass to obtain a preform, transferring the preform to a blowing mold (220), placing a blower (300) above the blowing mold (220) and introducing air inside the preform to obtain a glass container (1) with a final shape, introducing liquid water with a total level of solids less than or equal to 25 ppm in the glass container (1) to cool same, withdrawing the blower (300) by separating it from the blowing mold (220), and removing the glass container (1) from the blowing mold (220). The invention also relates to a glass container forming machine comprising the blower (300).

## Description

### TECHNICAL FIELD

The present invention relates to the manufacture of glass containers, wherein the glass containers are cooled with liquid water in the blowing molds of the forming machine to increase the production speed and reduce the occurrence of defects.

### PRIOR ART

Glass containers are manufactured on a production line having a hot area and a cold area. The hot area starts in a furnace, in which raw materials (typically including sand, sodium carbonate, limestone and recycled glass) are melted into molten glass. Next, the molten glass is divided up into gobs and by means of a distributor, the gobs are directed by gravity to a forming machine, referred to as an IS machine (individual section forming machine), where glass containers are formed by means of a press-blow or blow-blow process.

Each gob falls into a preparatory mold of the forming machine in which a preform referred to as parison is formed. The parison is formed using a plunger that pushes the molten glass inside the preparatory mold, or by blowing the glass for it to acquire the shape of the inside of the preparatory mold. The parison is inverted and transferred to a blowing mold, in which air is introduced inside the parison by means of a blower to impart the final shape of the glass container to same.

The glass containers are removed to a dead plate and are then directed to the final part of the hot area where there is a lehr annealing oven that heats the glass containers and then slowly cools them for a specific period of time, for example, for one hour, to subject the glass to an annealing process that reduces the internal tensions of the glass and the likelihood of breakage. The containers are inspected in the cold area to guarantee that they are free of defects, such as cracks, embedded fouling, bubbles or excessively thin walls, and finally, the glass containers are sent to a packaging area.

Cooling the glass containers in the hot area before the annealing oven to increase the production speed is known. For example, are known blowing molds with cooling systems to cool the outside of the glass container which is formed inside the blowing mold. Cooling the glass container after removing same from the blowing mold, for example, by means of cryogenic fluids or air streams, is also known.

US3235353A discloses a blower to introduce air in a parison and form a glass container, and also to cool the glass container directly inside the blowing mold by means of introducing water inside the container.

### DISCLOSURE OF THE INVENTION

The object of the invention is to provide a method for blowing and cooling glass containers, a blower for introducing water and air in the glass containers and a glass container forming machine incorporating said blowers, as defined in the claims.

One aspect of the invention relates to a method for blowing and cooling glass containers comprising the steps of:
- introducing a gob of molten glass in a preparatory mold having a cavity with an initial container shape,
- deforming the gob of glass inside the cavity of the preparatory mold to obtain a preform with the shape of the initial container,
- transferring the preform to a blowing mold having a cavity with a final container shape,
- placing a blower above the blowing mold and introducing air inside the preform to expand the preform and obtain a glass container with the shape of the final container,
- introducing liquid water in the glass container which is inside the blowing mold to cool the glass container,
- withdrawing the blower by separating it from the blowing mold, and
- removing the glass container from the blowing mold, wherein the liquid water introduced in the glass container has a total level of solids dissolved in the liquid water equal to or less than 25 ppm.

Another aspect of the invention relates to a blower for introducing air inside a preform located in a blowing mold and expanding the preform to obtain a glass container, comprising the blower:
- at least one blown air inlet to introduce air in the preform and obtain the glass container,
   o the blown air inlet is communicated with a blowing air passage extending from the blown air inlet to a lower end of the blower which is arranged above the blowing mold,
- at least one water inlet to introduce liquid water in the glass container and cooling the glass container,
   o the water inlet is communicated with a water passage extending from the water inlet to the blowing air passage, and
- at least one exhaust with an outlet duct to discharge the steam that is generated upon cooling the glass container, wherein the liquid water which is introduced in the glass container has a total level of solids dissolved in the liquid water equal to or less than 25 ppm.

Another aspect of the invention relates to a glass container forming machine comprising:
- preparatory molds, each preparatory mold having a cavity to receive a gob of molten glass and obtain a preform,
- blowing molds, each blowing mold having a cavity to receive a preform and obtain a glass container,
- transfer devices to transfer the preforms from the preparatory molds to the blowing molds,
- blowers, like the one defined above, to introduce air inside the preforms and expand the preforms to obtain the glass containers and to introduce liquid water inside the glass containers and cool the glass containers,
- an air supply to supply air to the blowers, and
- a water supply to supply liquid water to the blowers.

This increases the manufacturing speed by minimizing the risk of defects appearing. Introducing liquid water inside the blowing mold improves the cooling of the glass, allowing a higher production speed, since the annealing time in the lehr oven is eliminated or reduced, as is its power consumption. When the liquid water contacts with the molten glass which is at a high temperature (of about 1000 °C) rapidly evaporates and generates the precipitation of the solids contained in the water that are found inside the glass container, such that the low concentration of solids equal to or less than 25 ppm reduces the risk of the precipitation of said solids from the water that are found inside the glass container being able to affect the composition of the glass after it has vitrified.

These and other advantages and features of the invention will become apparent in view of the figures and the detailed description of the invention.

### DESCRIPTION OF THE DRAWINGS

Figure 1 shows an example of a production line for glass containers.
Figure 2 shows an example of a glass container forming machine according to the invention.
Figure 3 shows an example of a blower for forming and cooling a glass container according to the invention.
Figure 3a shows an enlarged detail of the blower of Figure 3.
Figure 4 shows an example of the water supply of the machine of Figure 2.
Figure 5 shows an example of the valves used to control the passage of fluids through the inlets and outlets of the blower.
Figure 6 shows a diagram of the events occurring during a complete glass container blowing and cooling cycle.

### DETAILED DISCLOSURE OF THE INVENTION

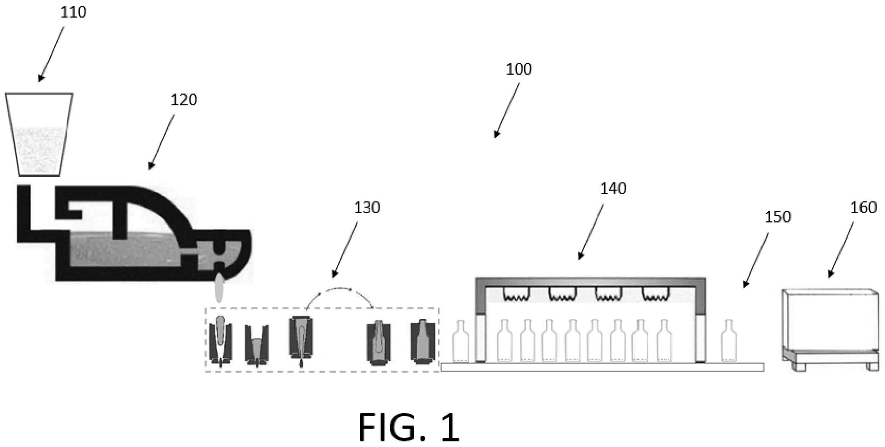

Figure 1 shows an example of a production line 100 for glass containers 1. The line comprises a raw material receiving area 110 in which the raw materials used to manufacture glass containers 1 are received, a melting area 120 in which the raw materials are melted to obtain molten glass, a forming area 130 in which the molten glass is transformed into glass containers 1, a treatment area 140 in which the containers 1 are thermally and superficially treated to prevent the formation of internal tensions and provide the glass with a higher degree of resistance, an inspection area 150 in which dimensional, functional and defect controls are performed in the containers 1 to check that they comply with the required quality demands, and a final packaging area 160 in which the glass containers 1 are grouped together on pallets for storage and transport.

The raw materials are received in the receiving area 110 and directed by means of conveyor belts to hoppers which supply raw materials to the melting area 120, which has a melting furnace in which raw materials are melted by means of burners at temperatures greater than 1000 °C. The molten glass in the form of gobs is supplied to the forming area 130 by means of distribution channels, with one glass container 1 being obtained with each gob of molten glass.

The transformation of molten glass into glass containers is performed, in the forming area 130, with forming machines 200 (referred to as IS machines) having a longitudinal arrangement with sections arranged parallel to one another, in which each section receives at least one gob of molten glass, and each gob is converted into a preform and then into a glass container 1 in a process referred to as press-blow or blow-blow.

The containers 1 grouped together are sent to the treatment area 140 having a lehr annealing tunnel, which separates the container production line 100 into a hot area and a cold area. The hot area extends from the furnace of the melting area 120 to the annealing tunnel of the treatment area 140, and the cold area extends from the annealing tunnel of the treatment area 140 to the end of the production line, in the final packaging area 160.

Therefore, at the outlet of the forming machine 200, the glass containers 1 are at a temperature higher than 650 °C, and to prevent the formation of internal tensions, are directed to the lehr annealing tunnel, which the glass containers 1 slowly go through, being reheated and then cooled. In the treatment area 140 the containers are subjected to different treatments. The glass containers 1 are then transferred to the inspection area 150 in which dimensional, functional and defect controls are performed on the containers 1 to check that they comply with the required quality demands to finally send the containers 1 to the final packaging area 160.

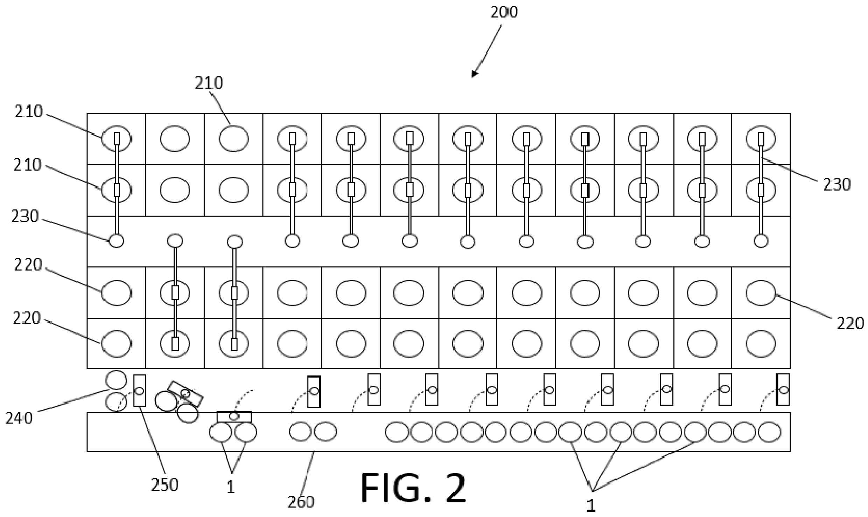

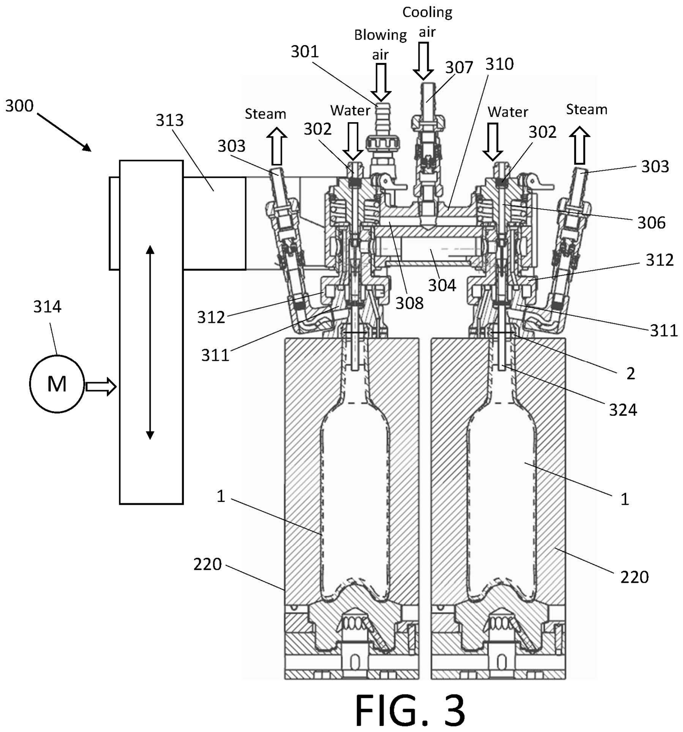

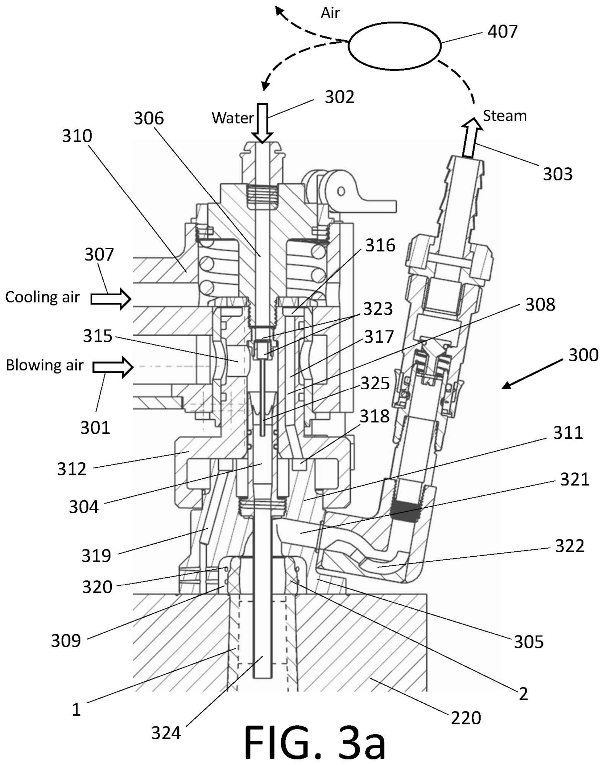

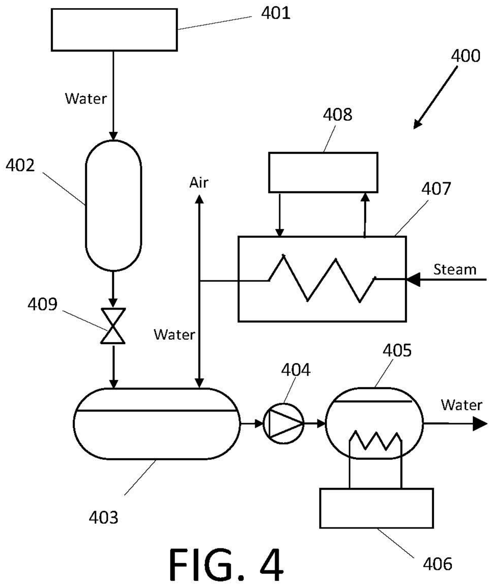

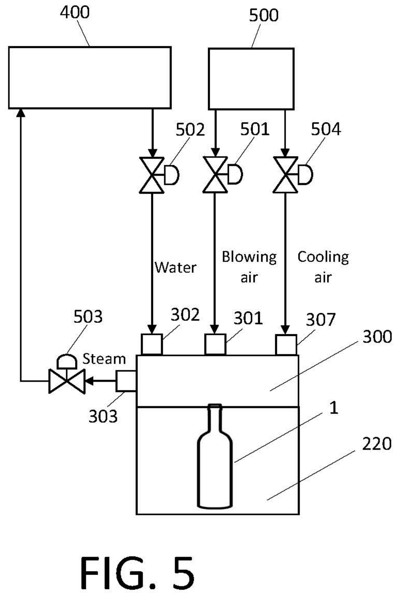

Figure 2 shows an example of a forming machine 200 of glass containers 1. The forming machine 200 has preparatory molds 210 and blowing molds 220. Each preparatory mold 210 has a cavity to receive a gob of molten glass and obtain a preform (referred to as parison), and each blowing mold 220 has a cavity to receive a preform and obtain a glass container 1. The machine 200 has transfer devices 230 (referred to as invert) to transfer the preforms from the preparatory molds 210 to the blowing molds 220 and blowers 300 (see Figure 3) to introduce air inside the preforms and expand the preforms to obtain the glass containers 1 and to introduce liquid water inside the glass containers 1 and cool the glass containers 1. The machine further comprises an air supply 500 to supply air to the blowers 300 and a water supply 400 to supply liquid water to the blowers 300 (see Figures 4 and 5).

The forming machine 200 shown in the example of Figure 2 has 12 double gob sections, and each section has two preparatory molds 210 and two blowing molds 220; however, it could be a machine with a different number of sections and/or with a different number of preparatory and blowing molds per section. For example, each section of the machine 200 can be single gob section, with a single preparatory mold and a single blowing mold, or each section can be up to a four gob section, with four preparatory molds and four blowing molds.

The glass containers 1 are removed from the blowing molds 220 by means of a clamp (not depicted) which arranges the glass containers 1 on the dead plate 240 and a pusher 250 pushes the glass containers 1 onto a conveyor belt 260 taking the glass containers 1 to the next area of the line 100, which can be the annealing tunnel of the treatment area 140 where the containers 1 continue to be cooled. According to the invention, the cooling performed in the blowing molds 220 with the liquid water allows considerably reducing the cooling time in the annealing tunnel, and therefore the total time for producing the glass containers 1.

According to the invention, the liquid water introduced in the glass container has a total level of solids dissolved in the liquid water equal to or less than 25 ppm. The liquid water with a low content of dissolved solids allows cooling the glass container 1 inside the blowing mold 220, preventing possible solids contained in the water from being embedded in the glass.

In the sense of the invention, ppm (parts per million) is understood to mean milligrams of solids per liter of water. That is, the liquid water used to cool the glass container has 25 milligrams, or less, of solids per liter of water.

Preferably, the liquid water is introduced in the glass container at a temperature equal to or greater than 50 °C, such that hot water is used and the risk of causing a thermal shock between the temperature of the glass and the temperature of the water, which brings about breakages in the glass, is reduced.

Even more preferably, the liquid water is introduced in the glass container at a temperature of between 50 and 150 °C.

When the glass is in the molten state, there is no risk of breakages, but when it starts to vitrify, the risk of breakage increases. In the case of a glass container, the risk is higher at the mouth of the container, which is the part of the container that first starts to cool, so introducing water at a temperature of less than 50 °C increases the risk of breakages occurring at the mouth of the container and of small glass particles being able to be released into the container, which is a critical failure since glass containers are intended to contain products for human consumption. Moreover, a temperature higher than 150 °C causes a loss of efficiency extracting heat from molten glass, since the water is rapidly converted to steam, which has a lower cooling capacity than liquid water.

Furthermore, the selected range of temperatures between 50-150 °C favors the water efficiently extracting heat from the glass without damaging it upon contacting the molten glass, and it is further transformed to steam, reducing the risk of there being small water or moisture particles that may fall into the container when it is withdrawn from the blowing mold.

Generally, a glass bottle manufacturing plant has an osmotized water supply (with a total level of solids dissolved in the water higher than 30 ppm) for the different processes that are performed in the plant. When manufacturing glass containers with said osmotized water at an ambient temperature of about 25 °C, lime deposits were generated both in the blower and at the bottom of the container, furthermore, with said water at 25 °C, the mouths of the containers came out full of cracks due to thermal shock during water evaporation.

It has been found that by introducing in the glass container liquid water at a temperature equal to or greater than 50 °C, and with a total level of solids dissolved in the liquid water less than or equal to 25 ppm the speed of manufacturing the glass containers increases, minimizing the risk of the occurrence of fissures and optimizing the energy cost of the process.

The best results are obtained with hot water between 80 and 100 °C and with a level of solids of less than 5 ppm. For example, it has been observed that with hot water at about 90 °C, the thermal shock is considerably reduced and hardly any fissures are generated. Furthermore, it has been observed that with the reduction of the level of solids in the water to about 3 ppm, no particles are deposited.

Additionally, the blowing mold 220 can have cooling means which indirectly cool the glass container 1 on the outside.

The blower 300 comprises a blown air inlet 301 to introduce air in the preform and obtain the glass container 1, a water inlet 302 to introduce liquid water in the glass container 1 and cooling the glass container 1, and an exhaust 303 with an outlet duct 321 to discharge the steam that is generated upon cooling the glass container.

As shown in the example of Figure 3, the blower 300 introduces air and liquid water inside two blowing molds 220, which are located in one of the sections of the forming machine 200 of Figure 2. In this case, each section of the machine 200 is a double gob section and has a blower 300 with a blown air inlet 301 shared by the two blowing molds 220, and a water inlet 302 and an exhaust 303 for each blowing mold 220.

As observed in detail in Figure 3a, the blown air inlet 301 is communicated with a blowing air passage 304 extending from the blown air inlet 301 to a lower end 305 of the blower 300 which is arranged above the blowing mold 220. The water inlet 302 is communicated with a water passage 306 extending from the water inlet 302 to the blowing air passage 304, such that the water is mixed with the blowing air in the blowing air passage 304 to obtain water particles which are introduced in the glass container 1, cooling same.

The blower 300 further comprises a cooling air inlet 307 to cool the outer surface of the mouth 2 of the glass container 1. The cooling air inlet 307 is communicated with a cooling air passage 308 extending from the cooling air inlet 307 to an annular chamber 309 which is arranged at the lower end 305 of the blower 300.

The blower 300 comprises a blower body 310, a blowing head 311 arranged at the lower end 305 of the blower 300, a support 312 of the blowing head 311 connecting the blower body 310 with the blowing head 311 and a support arm 313 which is attached to the blower body 310 to vertically move the blower 300 and bring it closer and withdraw it from the blowing mold 220.

In the example of Figure 3, which shows a blower 300 for a double gob section, the blower 300 comprises a blower body 310 and two supports 312 for two blowing heads 311, and each blowing head 311 is configured to be arranged above a respective blowing mold 220.

The blower body 310 comprises the blown air inlet 301, the water inlet 302 and the cooling air inlet 307. The blower body 310 has air intakes to receive the air and the water which is used to form the glass containers and cool same.

The support 312 for the blowing head 311 has a first part which is partially inserted in the blower body 310 and a second part encircling the blowing head 311, securing same. For example, the parts of the blower 300 can be attached to one another with threaded attachments. The first part of the support 312 has a side orifice 315 communicating the blown air inlet 301 with the blowing air passage 304 and a first annular collector 316 located at the upper end of the first part and communicating the cooling air inlet 307 with a first duct 317 extending along the support 312 of the blowing head 311 from the first annular collector 316 to the lower end of the first part of the support 312.

The blowing head 311 has a second annular collector 318 located at the upper end of the blowing head 311 and a second duct 319 extending from the second annular collector 318 to the annular chamber 309 of the lower end 305 of the blower 300, the first duct 317 of the support 312 of the blowing head 311 being communicated with the second collector 318 of the blowing head 311.

The cooling air passage 308 is thereby formed by the first annular collector 316 and the first duct 317 of the support 312 of the blowing head 311, and by the second annular collector, the second duct 319 and the annular chamber 309 of the blowing head 311.

As previously indicated, the blower 300 shown in Figure 3 introduces water and air in two blowing molds 220, such that the blowing air passage 304 has a first part with an inverted T-shaped to direct the air from the blown air inlet 301 to each blowing head 311. Similarly, the cooling air passage 308 has a first part with an inverted T-shaped to direct the air from the cooling air inlet 307 to each blowing head 311, namely the cooling air inlet 307 is connected with the annular collector 316 of each support 312.

The annular chamber 309 has a plurality of orifices 320 to direct the cooling air onto the outer surface of the mouth 2 of the glass container 1, whereby obtaining a plurality of air projections directing air to the mouth 2.

As observed in Figures 3 and 3a, the outlet duct 321 of the exhaust 303 is connected with the lower end 305 of the blower 300 which is in contact with the blowing mold 220 to discharge the steam that is generated during the formation of the glass container and during cooling.

Preferably, the outlet duct 321 of the exhaust 303 has a bent area 322 that prevents water particles from returning to the blower 300. Said bent area acts like a syphon and the water particles that have not been transformed into steam are trapped in the bent area, preventing them from returning to the blower 300. Water droplets are thereby prevented from falling onto vitrified glass once the blower 300 has been withdrawn from the blowing mold 220.

Preferably, the outlet duct 321 of the exhaust 303 has a slope with an downward inclination that prevents water particles from returning to the blower 300.

Even more preferably, as observed in Figure 3a, the slope with the downward inclination of the outlet duct 321 is located between the lower end 305 of the blower 300 and the bent area 322. Water particles that have not been transformed into steam and are deposited in the outlet duct 321 thereby tend to a slide along the slope of the duct 321 and fall into the bent area 322, where they are retained.

As observed in Figure 3a, the water passage 306 has sections 323, and each section 323 has a diameter. The diameter of the sections 323 gradually reduces between the water inlet 302 and the blowing air passage 304, such that the speed of the water gradually accelerates as it travels through the sections 323 of the water passage 306 for the water to be introduced in atomized form in the blowing air passage 304.

Preferably, the blowing air passage 304 has a first tube 324 directing the blowing air into the preform and the water passage 306 has a second tube 325 introducing liquid water in the first tube 324, the first tube 324 has a first diameter and the second tube 325 has a second diameter, the first diameter of the first tube 324 is larger than the second diameter of the second tube 325, and the first tube 324 and the second tube 325 are coaxial. The second diameter of the second tube 325 with a smaller size is selected to prevent excess water particles that may remain inside the tube 325 from dripping out after water is no longer being injected.

Preferably, and as shown in a schematic manner in Figure 3, the support arm 313 is actuated by an electric motor 314 which vertically moves the blower 300 to bring it closer to and separate it from the blowing mold 220. The risk of damaging the mouth 2 of the glass container 1 is thereby minimized, as the electric motor allows suitably controlling the displacements of the blower, which is not possible with drives of another type, such as pneumatic drives. Pneumatic drives cause sudden displacements, and especially cause impacts at the end stops of the displacement path of the blower 300, and over time, due to the impacts, allowances are generated in the elements forming the drive. This is particularly relevant when using the first tube 325, which is arranged inside the glass container 1 during air injection and has to be outside the glass container 1 when the container 1 is removed from the blowing mold 220, correct displacement of the first tube 325 is therefore preferable so that it does not hit the mouth 2.

Preferably, the exhaust 303 is connected with the water inlet 302 to reintroduce in the blower 300 hot water recovered from the steam that is generated upon cooling the glass container 1. This allows reusing the hot water from the cooling process, preventing the energy expenditure of having to heat it again, and it furthermore guarantees that water with a low solids content is reintroduced, the process thereby being more energy efficient.

As shown in the example of Figure 4, the water supply 400 of the machine 200 comprises an industrial water supply source 401, a demineralizer 402 connected with the industrial water supply source 401 to obtain liquid water with a total level of solids dissolved in the liquid water equal to or less than 25 ppm, a first water tank 403 connected with the demineralizer 402 to store the liquid water, a pump 404 connected with the first water tank 403 to pressurize the liquid water, a second water tank 405 connected with the outlet of the pump 404 to store the liquid water pressurized, and a heater 406 to heat the pressurized liquid water in the second tank 405 which is supplied to the blowers 300.

Preferably, the liquid water with the total level of solids dissolved in the liquid water less than or equal to 25 ppm is obtained by filtering industrial water in the demineralizer 402. For example, the industrial water may contain a total level of dissolved solids in the industrial water higher than 100 ppm. However, the solids in the water can be reduced by means of other chemical methods, or by means of biological or physical methods, or water with the total level of solids required instead of industrial water can be used directly.

Additionally, the water supply 400 comprises a heat exchanger 407 having an inlet connected with the exhausts 303 of the blowers 300, a first outlet connected with the first water tank 403 and a second outlet connected with the outside atmosphere, such that the steam removed from the exhausts 303 is directed to the heat exchanger 407 wherein said steam is broken down into air and hot water which is stored in the first water tank 403. The heat exchanger 407 uses a cold water source 408 to condense the steam and separate it into air and hot water.

The recovered hot water is generally not enough to fill the first water tank 403 again and repeat the cooling process for several cycles, as there are slight losses; it is therefore necessary to feed the tank 403 with the industrial water supply source 401. Accordingly, to control the amount of water to be demineralized and introduced in the water tank 403, a level detector 409, such as a ball valve, is used.

The heater 406 of the second tank 405 is optional in the case of recovering hot water through the exhaust 303 of the blowers 300. In such case, the temperature of the recovered hot water can be enough to heat the water that is to be introduced again into new glass containers 1, or at least it may be enough to noticeably reduce the energy expenditure of the heater 406.

The pump 404 raises the pressure in the second water tank 405 to at least 5 bar to achieve hot water at the outlet of the second tank 405 at least at 120 °C; however, the pump 404 can apply pressures greater than 5 bar if temperatures higher than 120 °C are required to evaporate the water more quickly.

The machine 200 comprises for each of the blowers 300 four valves to control the inlet and outlet fluids of the process of blowing and cooling glass containers. As shown in the example of Figure 5, each blower 300 comprises a first valve 501 to control the passage of the blowing air in the blown air inlet 301, a second valve 502 to control the passage of water in the water inlet 302, a third valve 503 to control the passage of the steam in the exhaust 303, and a fourth valve 504 to control the passage of the cooling air in the cooling air inlet 307. Each inlet 301, 302, and 307 and each outlet 303 of the blower 300 is controlled independently, such that in the blower 300 shown in Figure 3, which shows two blowing molds 220, a single valve 501 is used to regulate the blowing air, a single valve 504 to regulate the cooling air, and two valves 502 to regulate the water introduced in each glass container, and two valves 503 to regulate the steam removed from each glass container.

Preferably, the third valve 503 is a valve with an electronically controllable opening. That is, the valve has not only two states, open and closed, but the valve can also regulate the percentage of steam which is removed through the exhaust 303. The pressure inside the glass container 1 can thereby be controlled at all times when the blower 300 is arranged above the blowing mold 220.

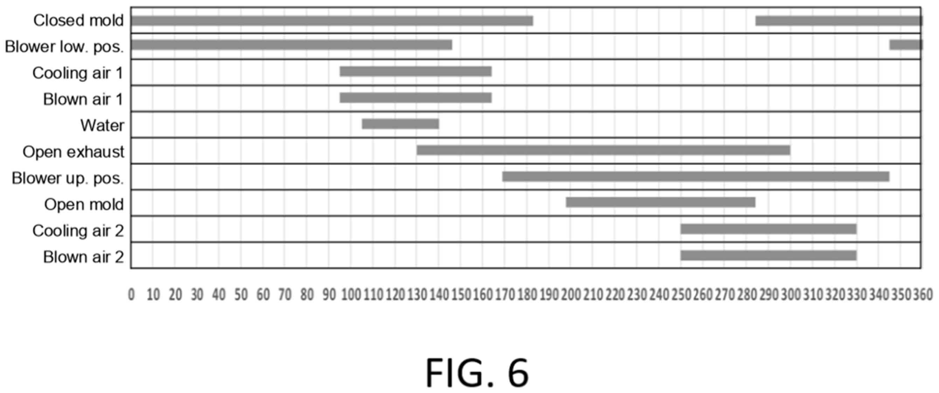

Figure 6 shows a diagram of times of the events occurring on the side of the blowing molds 220 of the forming machine 200. The diagram illustrates the blowing and cooling process from which the preform is introduced in the blowing mold 220 until the formed glass container 1 is withdrawn to the dead plate 240, and then a new preform is introduced in the blowing mold to form another glass container. The time is defined in machine degrees, and 360 degrees, which represent a full cycle of the forming machine 200, are depicted.

The process on the side of the blowing molds 220 starts when the transfer device 230 takes a preform from the preparatory mold 210 to the blowing mold 220; this process is referred to as inverting. In this position, the blowing mold 220, which is open, starts to be closed, and the transfer device 230 releases the preform and returns to the side of the preparatory molds 210. In the diagram of Figure 6, at degree 0, the blowing mold 220 is depicted as being closed with the preform inside it and the blower 300 in a lower position arranged above the blowing mold 220.

When the blowing mold 220 is closed, the blower 300 moves downwards from an upper position to be situated in the lower position above the blowing mold 220, as shown in Figure 3. This movement is generally performed slowly, as the preform needs to be elongated until touching the lower part of the blowing mold 220 and to be ready to be inflated.

When the blower is in the lower position, air is first introduced into the preform to expand the preform and obtain the glass container 1 (which is referred to as blowing air 1 in the diagram), and liquid water is then introduced in the glass container 1 to cool same (which is referred to as water in the diagram).

Preferably, the air to expand the preform is introduced at a pressure of between 1 bar and 3 bar. Preferably, the liquid water is introduced in the glass container 1 at a pressure of at least 3 bar.

Preferably, the liquid water is introduced in the glass container 1 together with air. The air allows the liquid water to be transformed into water particles, which is better for cooling the glass than if only liquid water was introduced in the absence of air.

When the air to expand the preform is introduced inside the preform, the cavity of the blowing mold 220 is at a first pressure, and when the air together with the liquid water to cool the glass container is introduced in the glass container, the cavity of the blowing mold 220 is at a second pressure, with the first pressure being greater than the second pressure. That is generally because more pressure is required inside the cavity to expand the glass. Essentially, the pressure inside the blowing mold is regulated by means of the valve 503 of the exhaust 303.

As illustrated in Figure 6, the exhaust 303 is opened after having started to introduce water to dislodge the mixture of air and steam of water resulting from the heat exchange; however, the exhaust 303 can be opened before starting to introduce water. For example, the exhaust 303 can be opened 15 machine degrees before, or 15 machine degrees after water starts to be introduced.

Preferably, air continues to be introduced after liquid water is no longer introduced. This means that no water particles remain inside the blower that may drop onto the hot glass when the blower is withdrawn from the blowing mold. For example, air can continue to be introduced for at least 10 machine degrees after water is no longer introduced.

Preferably, cooling air is introduced in the annular chamber 309 of the blower to cool the outer surface of the mouth 2 of the glass container 1. The pressure in the annular chamber 309 is greater than the pressure inside the glass container 1 to prevent the liquid water introduced in the glass container 1 from being transferred to the annular chamber 309. As shown in Figure 3a, when the head 311 of the blower 300 is arranged above the blowing mold 220, there is a minimum space between the upper part of the mouth 2 of the glass container 1 and the upper wall of the annular chamber 309 of the blower, because if the blower is physically touching the glass, defects in the mouth may be produced. Given the pressure at which the liquid water is introduced, small water particles can be filtered through that space and contact the outer part of the mouth 2 of the container 1, and given that said area is the first to be vitrified, thermal shock may be caused, generating breakages; however, by increasing the pressure in the annular chamber 309, the transfer of the water from the inside of the container 1 to the annular chamber 309 is prevented.

Preferably, the cooling air and the air to expand the preform are introduced at the same time. Internal fluids that may have traces of water from the formation of the previous container are thereby prevented from being transferred to the previously described space when air starts to be introduced to expand the preform. As observed in Figure 6, the cooling air and the air to expand the preform start to be introduced at the same time and both stop at the same time, thereby guaranteeing that the pressure in the annular chamber 309 is always greater than the pressure inside the mold 220 while introducing air and water.

The exhaust 303 is kept open after air and water are no longer introduced, and it is kept open until at least the blower 300 is withdrawn from the blowing mold 220. However, Figure 6 shows that the exhaust 303 is kept open until moments after the blowing mold is closed again to expand a new glass container.

Once the blowing mold 220 starts to open, a removal mechanism that holds the glass container 1 by the mouth 2 to prevent it from moving is activated. Once the blowing mold 220 has been fully opened, the removal mechanism transfers the glass container 1 to the dead plate 240.

Preferably, after withdrawing the blower 300 and separating same from the blowing mold 220 air is introduced in the blower 300 again to withdraw traces of water in the blower. As shown in Figure 6, after opening the blowing mold 220 and withdrawing the glass container 1, air is introduced again through the blowing air passage 304 and through the cooling air passage 308 to remove any trace of water that may remain in the blower 300. The blower 300 is thereby prepared to form and cool a new preform. In the diagram of Figure 6, this newly introduced air is referred to as blowing air 2 and cooling air 2.

## Claims

1. Method for blowing and cooling glass containers, comprising the steps of:
- introducing a gob of molten glass in a preparatory mold (210) having a cavity with an initial container shape,
- deforming the gob of glass inside the cavity of the preparatory mold (210) to obtain a preform with the shape of the initial container,
- transferring the preform to a blowing mold (220) having a cavity with a final container shape,
- placing a blower (300) above the blowing mold (220) and introducing air inside the preform to expand the preform and obtain a glass container (1) with the shape of the final container,
- introducing liquid water in the glass container (1) which is inside the blowing mold (220) to cool the glass container (1),
- withdrawing the blower (300) by separating it from the blowing mold (220), and
- removing the glass container (1) from the blowing mold (220),
**characterized in that** the liquid water introduced in the glass container (1) has a total level of solids dissolved in the liquid water less than or equal to 25 ppm.

2. Method according to claim 1, wherein the liquid water is introduced in the glass container (1) at a temperature equal to or greater than 50 °C.

3. Method according to the preceding claim, wherein the liquid water is introduced in the glass container (1) at a temperature of between 50 and 150 °C.

4. Method according to any of the preceding claims, wherein the liquid water is introduced in the glass container (1) at a pressure of at least 3 bar.

5. Method according to any of the preceding claims, wherein the air to expand the preform is introduced at a pressure of between 1 bar and 3 bar.

6. Method according to any of the preceding claims, wherein air is first introduced into the preform to expand the preform and obtain the glass container (1), and liquid water is then introduced in the glass container (1) to cool same, and wherein the liquid water is introduced in the glass container (1) together with air.

7. Method according to the preceding claim, wherein the introduction of air is maintained after liquid water is no longer introduced.

8. Method according to claim 6 or 7, wherein when the air to expand the preform is introduced inside the preform, the cavity of the blowing mold (220) is at a first pressure, and when the air together with the liquid water to cool the glass container is introduced in the glass container, the cavity of the blowing mold (220) is at a second pressure, with the first pressure being greater than the second pressure.

9. Method according to any of the preceding claims, wherein after withdrawing the blower (300) and separating same from the blowing mold (220) air is introduced in the blower (300) again to withdraw traces of water in the blower (300).

10. Method according to any of the preceding claims, wherein is introduced cooling air in an annular chamber (309) of the blower (300) to cool the outer surface of the mouth (2) of the glass container (1), with the pressure in the annular chamber (309) being greater than the pressure inside the glass container (1) to prevent the liquid water from being transferred to the annular chamber (309).

11. Method according to the preceding claim, wherein the cooling air and the air to expand the preform are introduced at the same time.

12. Method according to any of the preceding claims, wherein an electric motor (314) vertically moves the blower (300) to bring it closer to and separate it from the blowing mold (220).

13. Method according to any of the preceding claims, wherein upon cooling the glass container (1), steam is generated, being removed through an exhaust (303) of the blower (300), and the steam is directed to a heat exchanger (407) wherein hot water is recovered from said steam, and said recovered hot water is recirculated to the blower (300) to cool a new glass container (1).

14. Method according to any of the preceding claims, wherein the liquid water with the total level of solids dissolved in the liquid water less than or equal to 25 ppm is obtained by filtering industrial water in a demineralizer (402).

15. Blower for introducing air inside a preform located in a blowing mold (220) and expanding the preform to obtain a glass container (1), the blower (300) comprising:
- at least one blown air inlet (301) to introduce air in the preform and obtain the glass container (1),
o the blown air inlet (301) is communicated with a blowing air passage (304) extending from the blown air inlet (301) to a lower end (305) of the blower (300) which is arranged above the blowing mold (220),
- at least one water inlet (302) to introduce liquid water in the glass container (1) and cooling the glass container (1),
o the water inlet (302) is communicated with a water passage (306) extending from the water inlet (302) to the blowing air passage (304), and
- at least one exhaust (303) with an outlet duct (321) to discharge the steam that is generated upon cooling the glass container (1),
wherein the liquid water which is introduced in the glass container (1) has a total level of solids dissolved in the liquid water equal to or less than 25 ppm.

16. Blower according to claim 15, wherein the liquid water which is introduced in the glass container (1) has a temperature equal to or greater than 50 °C, preferably a temperature of between 50 and 150 °C.

17. Blower according to claim 15 or 16, comprising at least one cooling air inlet (307) to cool the outer surface of the mouth (2) of the glass container (1), the cooling air inlet (307) is communicated with a cooling air passage (308) extending from the cooling air inlet (307) to an annular chamber (309) which is arranged at the lower end (305) of the blower (300).

18. Blower according to the preceding claim, comprising:
- a blower body (310), the blower body (310) comprising the blown air inlet (301), the water inlet (302) and the cooling air inlet (307),
- at least one blowing head (311) arranged at the lower end (305) of the blower (300),
- at least one support (312) of the blowing head (311) connecting the blower body (310) with the blowing head (311), and
- a support arm (313) which is attached to the blower body (310) to vertically move the blower (300) and bring it closer and withdraw it from the blowing mold (220).

19. Blower according to the preceding claim, wherein the support arm (313) is actuated by an electric motor (314) which vertically moves the blower (300).

20. Blower according to claim 18 or 19, wherein:
- the support (312) of the blowing head (311) has a first part which is partially inserted in the blower body (310) and a second part encircling the blowing head (311) securing same, the first part of the support (312) has a side orifice (315) communicating the blown air inlet (301) with the blowing air passage (304) and a first annular collector (316) located at the upper end of the first part of the support (312) and communicating the cooling air inlet (307) with a first duct (317) extending along the support (312) of the blowing head (311) from the first annular collector (316) to the lower end of the second part of the support (312), and
- the blowing head (311) has a second annular collector (318) located at the upper end of the blowing head (311) and a second duct (319) extending from the second annular collector (318) to the annular chamber (309) of the lower end (305) of the blower (300), the first duct (317) of the support (312) of the blowing head (311) being communicated with the second collector (318) of the blowing head (311).

21. Blower according to any of claims 17 to 20, wherein the annular chamber (309) has a plurality of orifices (320) to direct cooling air on the outer surface of the mouth (2) of the glass container (1).

22. Blower according to any of claims 15 to 21, wherein the outlet duct (321) of the exhaust (303) has a bent area (322) that prevents water particles from returning to the blower (300).

23. Blower according to any of claims 15 to 21, wherein the outlet duct (321) of the exhaust (303) has a slope with an upward inclination that prevents water particles from returning to the blower (300).

24. Blower according to the preceding claim, wherein the slope with the upward inclination of the outlet duct (321) is located between the lower end (305) of the blower (300) and the bent area (322).

25. Blower according to any of claims 15 to 24, wherein the water passage (306) has sections (323), and each section (323) has a diameter, the diameter of the sections (323) gradually reducing between the water inlet (302) and the blowing air passage (304), such that the speed of the water gradually accelerates as it travels through the sections (323) of the water passage (306) for the water to be introduced in atomized form in the blowing air passage (304).

26. Blower according to any of claims 15 to 25, wherein the blowing air passage (304) has a first tube (324) directing the blowing air into the preform, and the water passage (306) has a second tube (325) introducing liquid water in the first tube (324), the first tube (324) has a first diameter and the second tube (325) has a second diameter, the first diameter of the first tube (324) is larger than the second diameter of the second tube (325), and the first tube (324) and the second tube (325) are coaxial.

27. Blower according to any of claims 15 to 26, wherein the exhaust (303) is connected with the water inlet (302) to reintroduce in the blower (300) hot water recovered from the steam that is generated upon cooling the glass container (1).

28. Glass container forming machine comprising
- preparatory molds (210), each preparatory mold (210) having a cavity to receive a gob of molten glass and obtain a preform,
- blowing molds (220), each blowing mold having a cavity to receive a preform and obtain a glass container (1),
- transfer devices (230) to transfer the preforms from the preparatory molds (210) to the blowing molds (220),
- blowers (300) according to claims 14 to 25, to introduce air inside the preforms and expand the preforms to obtain the glass containers (1) and to introduce liquid water inside the glass containers (1) and cool the glass containers (1),
- an air supply (500) to supply air to the blowers (300), and
- a water supply (400) to supply liquid water to the blowers (300).

29. Machine according to claim 28, wherein the water supply (400) comprises:
- an industrial water supply source (401),
- a demineralizer (402) connected with the industrial water supply source (401) to obtain liquid water with a total level of solids dissolved in the liquid water equal to or less than 25 ppm,
- a first water tank (403) connected with the demineralizer (402) to store the liquid water,
- a pump (404) connected with the first water tank (403) to pressurize the liquid water,
- a second water tank (405) connected with the outlet of the pump (404) to store the liquid water pressurized, and
- a heater (406) to heat the pressurized liquid water in the second tank (405) which is supplied to the blowers (300).

30. Machine according to the preceding claim, wherein the water supply (400) further comprises a heat exchanger (407) having an inlet connected with the exhausts (303) of the blowers (300), a first outlet connected with the first water tank (403) and a second outlet connected with the outside atmosphere, such that the steam removed from the exhausts (303) is directed to the heat exchanger (407) wherein said steam is broken down into air and hot water which is stored in the first water tank (403).

31. Machine according to any of claims 28 to 30, wherein each blower (300) of the machine (200) comprises at least one first valve (501) to control the passage of the blowing air in the blown air inlet (301), at least one second valve (502) to control the passage of water in the water inlet (302), at least one third valve (503) to control the passage of the steam in the exhaust (303), and at least one fourth valve (504) to control the passage of the cooling air in the cooling air inlet (307).

32. Machine according to the preceding claim, wherein the third valve (503) is a valve with an electronically controllable opening.
